# EUROPEAN PATENT SPECIFICATION

(11) **EP 2 417 884 B1**
(45) Date of publication and mention of the grant of the patent: **25.03.2015**
(21) Application number: 10761843.1
(22) Date of filing: 06.04.2010
(51) Int. Cl.: A47J 27/086, A47J 27/62, A21B 3/04, A47J 27/04, F24C 1/04, F24C 15/32

(54) **COOKING APPLIANCE CONTROL METHOD**
STEUERVERFAHREN FÜR EINE KOCHVORRICHTUNG
PROCÉDÉ DE COMMANDE D'APPAREIL DE CUISSON

(30) Priority: 06.04.2009 KR 20090029652
(43) Date of publication of application: 15.02.2012
(73) Proprietor: LG Electronics Inc., Seoul 150-721 (KR)
(72) Inventor: CHOI, Sung-Ho, Gyoungsangnam-do 641-711 (KR); KIM, Su-Hwan, Gyoungsangnam-do 641-711 (KR); LEE, Sang-Ki, Gyoungsangnam-do 641-711 (KR); OH, Kwang-Suk, Gyoungsangnam-do 641-711 (KR); KIM, Jeong-Kil, Gyoungsangnam-do 641-711 (KR); SHIN, Jang-Mo, Gyoungsangnam-do 641-711 (KR)
(74) Representative: Vossius & Partner
(86) International application number: PCT/KR2010/002088
(87) International publication number: WO 2010/117182

(56) References cited:
- JP-A- 2005 282 893
- JP-A- 2007 032 926
- KR-A- 20060 046 737
- KR-B1- 100 704 787
- KR-B1- 100 710 218

## Description

### [Technical Field]

The present disclosure relates to a cooker, and more particularly, to a method for controlling a cooker that cooks a food using steam.

### [Background Art]

Cookers are home appliances that heat a food using electricity or gas. In recent, cookers in which a steam function for supplying steam into a food is added to supplement moisture which is evaporated during the cooking of the food are being put on the market.

### [Disclosure]

### [Technical Problem]

However, steam supplied into the cooking chamber may be discharged into the cooker.

KR 10-0704787 discloses an automatic control device of preheating temperature of a steam oven and a method thereof, which automatically adjust the internal temperature of the steam oven corresponding to the predetermined temperature without opening a door.

KR 2006-0046737 relates to a heating cooker that allows for ease of mounting/removal of a water tank of a steam generator even without increasing the size of the heating cooker and reducing the internal volume of a cooking chamber.

JP 2005-282893 relates to a heating cooker capable of dispensing with an exclusive container and an exclusive heater for generating steam, improving the cleaning workability of the container generating steam, and easily generating steam.

JP 2007-032926 relates to a trouble-free and safe heating cooker capable of generating steam stably in a heating chamber, and preventing water from overflowing from a steam generating means.

KR 10-0710218 discloses a steam oven for cooking foods by supplying radiation heat through a halogen heater and steam through a steam generator, thereby reducing a cooking time using a simple structure.

### [Technical Solution]

Embodiments provide a method of controlling a cooker configured to effectively and safely cook a food using steam.

In one embodiment, a method for controlling a cooker includes: generating radiant heat and convection heat supplied into a cooking chamber by a heating source; and operating a steam generator to generate steam supplied into the cooking chamber, wherein, when a signal for starting an operation of the steam generator is input before an operation of the heating source starts, the operation of the steam generator starts at a preset time point regardless of a time point at which the operation of the heating source starts, and when a signal for starting an operation of the steam generator is input after an operation of the heating source starts, the operation of the steam generator starts at a time point at which the signal is input.

The details of one or more embodiments are set forth in the accompanying drawings and the description below. Other features will be apparent from the description and drawings, and from the claims.

### [Advantageous Effects]

According to the embodiments, the food may be further effectively and safely cooked using steam.

### [Description of Drawings]

Fig. 1 is a schematic view of a cooker controlled by a method for controlling a cooker according to an embodiment.
Fig. 2 is a control flowchart illustrating a method for controlling a cooker according to a first embodiment.
Fig. 3 is a graph illustrating operating times of components according to the first embodiment.
Figs. 4 and 5 are control flowcharts illustrating a method for controlling a cooker according to a second embodiment.
Figs. 6 and 7 are graphs illustrating operating times of components according to the second embodiment.

### [Best Mode]

Hereinafter, a cooker controlling method according to embodiments will be explained in detail with reference to the accompanying drawings.

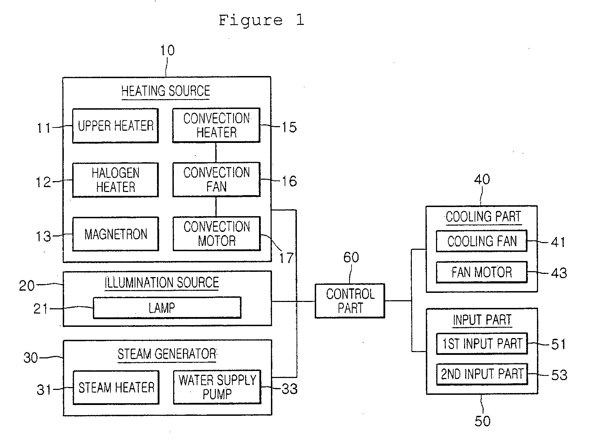

Fig. 1 is a schematic view of a cooker controlled by a method for controlling a cooker according to an embodiment.

Referring to Fig. 1, in the current embodiment, a heating source 10 for cooking a food in a cooking chamber includes an upper heater 11, a halogen heater 12, and a magnetron 13. The upper heater 11 is installed in the upper portion of a cooking chamber to provide radiating heat into the cooking chamber. As the upper heater 11, a Sheath heater may be used. And, the halogen heater 12 provides radiating heat including light and heat into the cooking chamber. The halogen heater 12 provides radiating heat to the cooking chamber through a porous part (not shown) installed in the upper portion of the cooking chamber and formed at the ceiling of the cooking chamber. The magnetron 13 oscillates a microwave irradiated into the cooking chamber.

Also, the heater 10 further includes a convention heater 15, a convention fan 16 and a convection motor 17. The convection heater 15, the convection fan 16 and the convection motor 17 supply convective heat to the cooking chamber. More particularly, since air heated by the convection heater 15 circulates around the cooking chamber by the operation of the convection fan 16, convective heat is supplied to the cooking chamber. The convection motor 17 provides a drive force for the operation of the convection fan 16.

An illumination source 20 illuminates inside the cooking chamber. As the illumination source 20, a lamp 21 may be used.

And, a steam generator 30 may be provided to supply steam into the cooking chamber. The steam generator 30 includes a steam heater 31 and a water supply pump 33. The steam heater 31 heats steam water for generating steam supplied to the cooking chamber. The water supply pump 33 supplies steam water heated by the steam heater 31.

For the cooling of the heating source 10 and the ventilation of the inside of the cooking chamber, a cooling part 40 may be provided. The cooling part 40 includes a cooling fan 41 and a fan motor 43. That is, the encapsulation parts of the halogen heater 12, a magnetron 13, a steam heater 31 and a water supply pump 33 may be cooled by air flowing by the cooling fan 41 and the fan motor 43. Also, in a case the fan motor 43 is driven, the cooling fan 41 operates so that the external air may be supplied inside the cooking chamber, and air supplied into the cooking chamber may be drained to the exterior of the cooking chamber in a state of containing oil and moisture, etc., existing in the cooking chamber.

A manipulation signal for the operation of the heating source 10 and the steam generator 30 is input to an input part 50. The input part 50 includes a first input part 51 receiving a manipulation signal for cooking food in the cooking chamber and a second input part 53 receiving a manipulation signal for the supply of steam into the cooking chamber. Herein, the first input part 51 receives a manipulation signal for cooking food in the cooking chamber using at least one of the heating sources 10 and the steam generator 30 (hereinafter, for the convenience of explanation, referred to as a 'manipulation signal (OSO)' and a manipulation signal for cooking food in the cooking chamber using at least one of the heating sources 10 only (hereinafter, for the convenience of explanation, referred to as a 'first manipulation signal (OS1)'. More particularly, according to the manipulation signal (OS0), the operation start and end time of any one or more of the heating sources 10, or the operation start and end time of any one or more of the heating sources 10 and the operation start and end time of the steam generator 30 is set. Herein, the operation of the steam generator 30 indicates the operation of a steam pump 31 and a water supply pump 33 in an actual meaning. And, the second input part 53 receives an manipulation signal for the start and end of a steam supplying into the cooking chamber among the operation of the heating source 10 (hereinafter, for the convenience of explanation, referred to as 'second and third manipulation signals (OS02) (OS03) '. More particularly, according to the input time of the second manipulation signal (OS2), the operation start time of the steam generator is set. And according to the input time of the third manipulation signal (OS3), the operation end time of the steam generator 30 is set.

The control part 60 controls the operation of the heating source 10, the illumination source 20, the steam generator 30 and the cooling part 40 according to a manipulation signal inputted into the input part 50. That is, in actuality, the control part 60 controls the operation of the upper heater 11, the upper heater 11, the convection heater 15, the convection motor 17, the lamp 21, the steam heater 31, the water supply pump 33 and the fan motor 43.Hereinafter, a method for controlling a cooker according to a first embodiment will be described in detail with reference to the accompanying drawings.

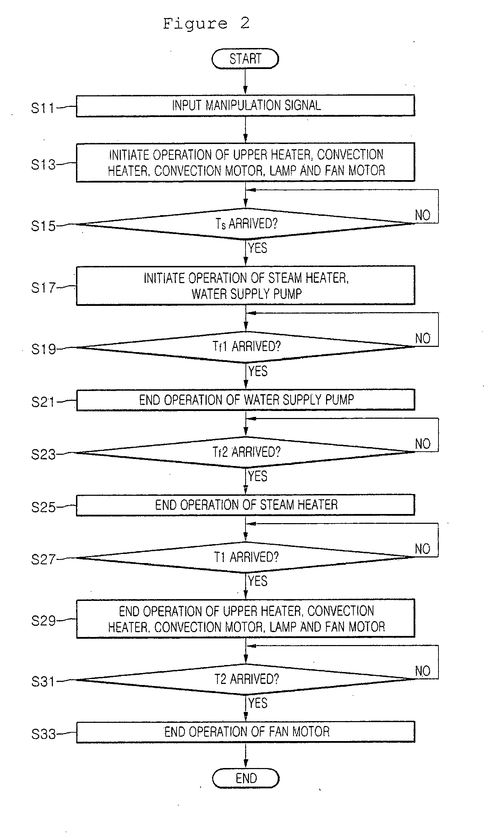

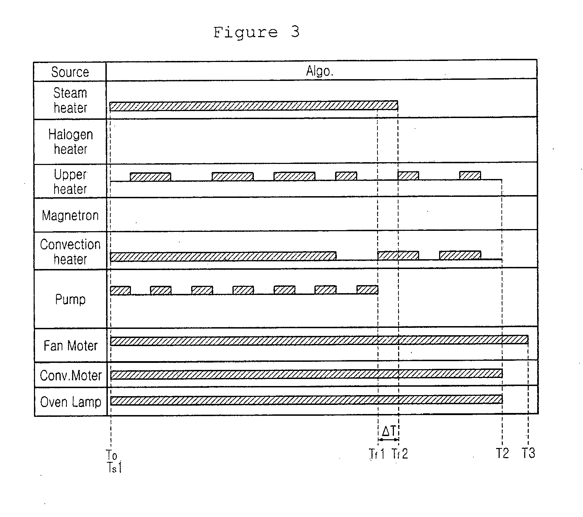

Fig. 2 is a control flowchart illustrating a method for controlling a cooker according to a first embodiment. Fig. 3 is a graph illustrating operating times of components according to the first embodiment.

Referring to Figs. 2 and 3, initially the input part 50 receives a manipulation signal (OS0) in operation S11.

In operation S11, in a case the first input part 51 receives the manipulation signal (OS0), the control part 60 controls to initiate the operation of an upper heater 11, a convection heater 15, a convection motor 17, a lamp 21 and a fan motor 43 at a preset heating start time (TO) according to the manipulation signal (OS0) (S13). At this time, the upper heater 11 repeats an ON/OFF action at a preset time interval according to the manipulation signal (OS0). And, the convection heater 15 repeats an ON/OFF action to maintain the cooking chamber temperature at a preset temperature according to the manipulation signal (OS0), and the convection motor repeats an ON/OFF action at a preset time interval according to the manipulation signal (OS0). The lamp 21 and the fan motor 43 continue ON action. Thus, food cooking in the cooking chamber is initiated by the upper heater 11 and the convection heater 15. Also, illumination inside the cooking chamber by the lamp 21, and the cooling of said components and the ventilation of the cooking chamber by the cooling fan 41 are performed.

And, after the operation of the upper heater 11, the convection heater 15, the convection motor 17, the lamp 21 and the fan motor 43 was initiated, the control part 60 determines if they have arrived at a preset steam generating start time (Ts) according to the manipulation signal (OS0) (S15). In the current embodiment, the steam generating start time (Ts) is set as the same point as the heating start time (TO). However, based on food cooked in the cooking chamber, the steam generating start time (Ts) may be set at a different point from the heating start time (TO).

In operation S15, when determined that the steam generating start time (Ts) has arrived, the control part 60 controls to start the operation of the steam generator (S17). Thus, by the operation of the steam heater 31 and the water supply pump 33, steam is supplied into the cooking chamber. More particularly, steam water supplied by the water supply pump 33 is heated by means of the steam heater 31 and then furnished into the cooking chamber in a steam form. Here, the steam heater 31 continues an ON action, and the water supply pump 33 performs a pumping action at a preset time interval according to the manipulation signal (OS0). Also, by the operation of the upper heater 11, a phenomenon that steam furnished into the cooking room leaks out of the cooking room through a porous part, which transfers the light and heat of the upper heater 11 to the cooking room, to cause damage to the upper heater 11, etc., is prevented. In addition, by circulating air inside the cooking chamber through the convection fan 16 driven by the operation of the convection motor 17, steam furnished into the cooking chamber may circulate inside the cooking chamber more effectively.

Next, after the operation of the steam heater 21 and the water supply pump 33 was initiated, the control part 60 determines if they have arrived at a preset water supply end time (Tf1) according to the manipulation signal (OS0) (S19). In operation S19, determined that they have arrived at the water supply end time (Tf1), the control part 60 controls to finish the operation of the water supply pump 33 (S21). Thus, the furnishing of steam water heated by the steam heater 31 is ended. However, since the steam heater 31 continues its operation, steam water pre-supplied by the water supply pump 33 is continuously heated by the steam heater 31 and then furnished into the cooking chamber in a steam form.

And, the control part 60 determines if a preset steam heating end time (Tf2) according to the manipulation signal (OS0) has arrived after the operation of the water supply pump 33 is ended (S23). In operation S23, determined that the steam heating end time (Tf2) has arrived, the control part 60 controls to finish the operation of the steam heater 31 (S25). Therefore, a steam furnishing into the cooking chamber is ended.

Next, the control part 60 determines if a preset heating end time (T1) according to the manipulation signal (OS0) has arrived after the operation of the steam heater 31 is ended (S27). In operation S27, determined that the heating end time (T1) has arrived, the control part 60 controls to end the operation of the upper heater 11, the convection heater 15 and the convection motor 17 and the operation of the lamp 21 (S29). Thus, food cooking in the cooking chamber by the upper heater 11 and the convection heater 15, and illumination inside the cooking chamber by the lamp 21 are ended.

And, after the operation of the upper heater 11, the convection heater 15 and the convection motor 17 and the operation of the lamp 21 was ended, the control part 60 determines if a preset fan motor end time (T2) according to the manipulation signal (OS0) has arrived (S31). In operation S31, determined that the fan motor end time (T2) has arrived, the control part 60 controls to end the operation of the fan motor 43. Thus, the cooling of said component and the ventilation of a kitchen by the fan motor 43 is ended.

### [Mode for Invention]

Hereinafter, a method for controlling a cooker according to a second embodiment will be described in detail with reference to the accompanying drawings.

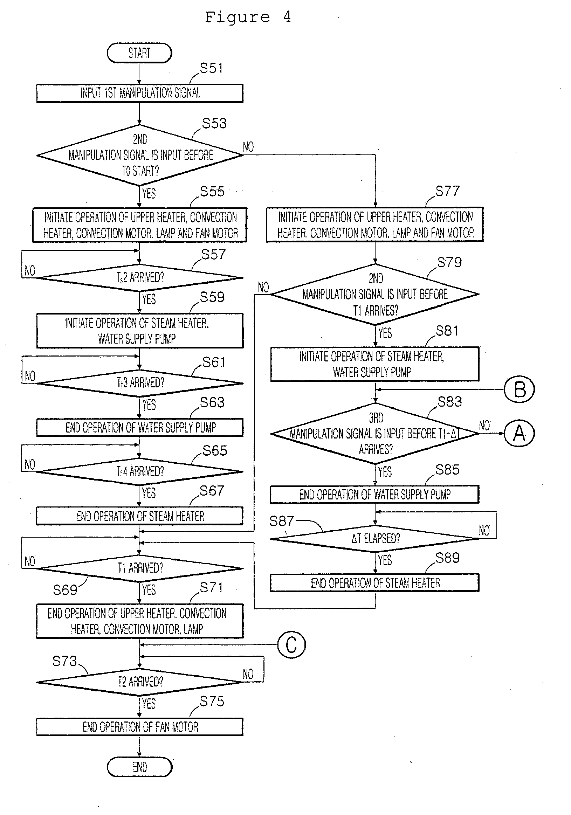

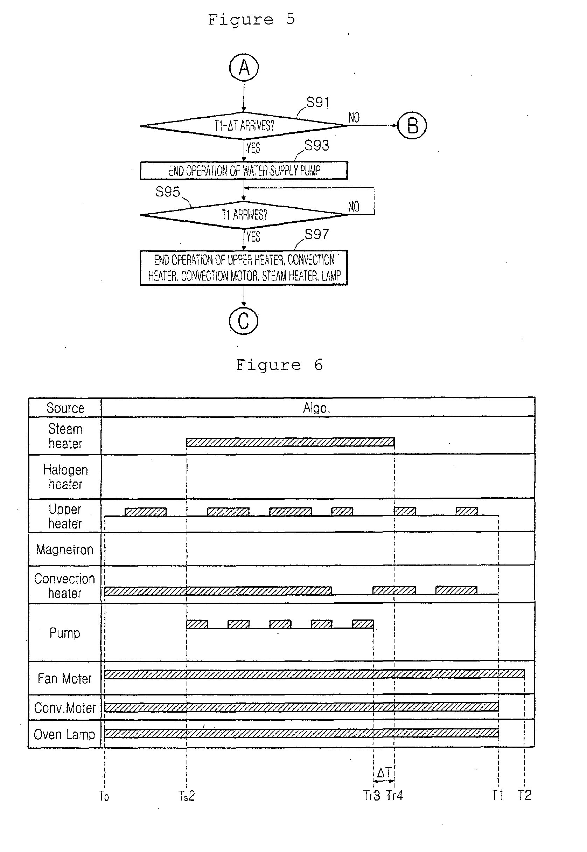

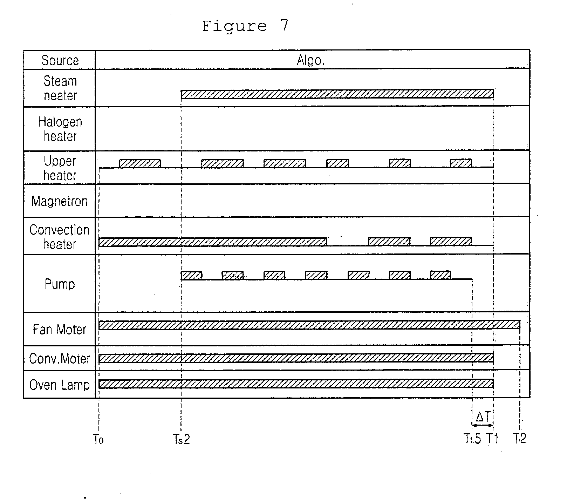

Figs. 4 and 5 are control flowcharts illustrating a method for controlling a cooker according to a second embodiment. Figs. 6 and 7 are graphs illustrating operating times of components according to the second embodiment.

Referring to Figs 4 to 7, initially an input part 50, more particularly a first input part 51 receives a first manipulation signal (OS1) (S51). In operation S51, in a case the first input part 51 receives the first manipulation signal (OS1), the control part 60 determines if the input part 50, that is a second input part 53, received a second manipulation signal (OS2) for the operation of the steam heater 31 and the water supply pump 33 before a preset heating start time (TO) according to the first manipulation signal (OS1) has arrived (S53).

In operation S53, determined that the second manipulation signal (OS2) was input before the heating start time (TO) has arrived, the control part 60 controls to initiate the operation of the upper heater 11, the convection heater 15, the convection motor 17, the lamp 21 and the fan motor 43 at the heating start time (TO) (S55).

And, the control part 60 determines if a preset steam generation start time (Ts) according to the second manipulation signal (OS2) has arrived after the operation of the upper heater 11, the convection heater 15, the convection motor 17, the lamp 21 and the fan motor 43 was initiated (S57). In operation S57, determined that the steam generation start time (Ts) has arrived, the control part 60 controls to initiate the operation of the steam heater 31 and the water supply pump 33 (S59).

Next, the control part 60 determines if a preset water supply end time (Tf1) according to the second manipulation signal (OS2) has arrived after the operation of the water supply pump 33, was initiated (S61): In operation S61, determined that the water supply end time (Tf1) has arrived, the control part 60 controls to end the operation of the water supply pump 33 (S63).

After the operation of the water supply pump 33 was ended, the control part 60 determines if a preset steam heating end time (Tf2) according to the second manipulation signal (OS2) has arrived (S65). In operation S65, determined that the steam heating end time (Tf2) has arrived, the control part 60 controls to end the operation of the steam heater 31 (S67).

And, the control part 60 determines if a preset heating end time (T1) according to the first manipulation signal (OS1) has arrived after the operation of the steam heater 31 was ended (S69). In operation S69, determined that the heating end time (T1) has arrived, the control part 60 controls to end the operation of the upper heater 11, the convection heater 15 and the convection motor 17 and the operation of the lamp 21 (S71).

The control part 60 determines if a preset fan motor end time (T2) according to the first manipulation signal has arrived, after the operation of the upper heater 11, the convection heater 15 and the convection motor 17 and the operation of the lamp 21 was ended (S73). In operation S73, determined that the fan motor end time (T2) has arrived, the control part 60 controls to end the operation of the fan motor 43 (S75). To be sure, a specific operation of the upper heater 11, the convection heater 15, the convection motor 17, the steam heater 31, the water supply pump 33, the lamp 21 and the fan motor 43 of the operations S51 through S75 of the current embodiment as described above may be substantially the same as that of operations S11 to S33 of the aforementioned first embodiment. In other words, in a case the first input part 51 receives the manipulation signal (OS0) and in a case the first input part 51 receives the first manipulation signal (OS1) and then the second input part 53 receives the second manipulation signal (OS2) before the heating operation start time (TO) is initiated, a specific operation of the upper heater 11, the convection heater 15, the convection motor 17, the steam heater 31, the water supply pump 33, the lamp 21 and the fan motor 43 is the same between them. Of course, the steam generation start time (Ts), the water supply end time (Tf1) and the steam heating end time (Tf2) may be differently set based on the manipulation signal (OS0) and the second manipulation signal (OS2). Therefore, in the control according to the operations S51 to S75 of the current embodiment, a specific operation of the upper heater 11, the steam heater 15, the convection motor 17, the steam heater 31, the water supply pump 33, the lamp 21 and the fan motor 43 could be understood more definitely with reference to Fig. 3.

In a case the control part 60 determines that the second manipulation signal (OS2) was not inputted in operation S53 before a heating start time (TO) has arrived, the control part 60 controls to initiate the operation of the upper heater 11, the convection heater 15, the convection motor 17, the lamp 21 and the fan motor 43 at the heating start time (TO) (S77). And, the control part 60 determines again if the second manipulation signal OS2 was inputted before the heating end time (T1) has arrived (S79).

In operation S79, determined that the second manipulation signal (OS2) was inputted before the heating end time (T1) has arrived, the control part 60 controls to initiate the operation of the steam heater 31 and the water supply pump 33 at a time (Ts2) when the second manipulation signal (OS2) is input (S81). When the operation of the steam heater 31 and the water supply pump 33 is initiated, the control part 60 determines if the second input part 53 received a third input signal (OS3) for the end of the steam heater 31 and the water supply pump 33 before a point, that is a previous time by a preset remaining water removal time (ΔT) from the heating end time (T1), has arrived (S83) .

In operation S83, determined that the third manipulation signal (OS3) was input before a previous time by a preset remaining water removal time (ΔT) from the heating end time (T1) has arrived, the control part 60 controls to end the operation of the water supply pump 33 at a time (Tf3) when the third operation time (OS3) is input (S85). And, when the operation of the water supply pump 33 is ended, the control part 60 determines if the remaining water removal time (LT) has elapsed, and controls to end the operation of the steam heater 31 at a time (Tf4) when the remaining water removal time (ΔT) has elapsed from the input time (Tf3) (S87) (S89).

In the meantime, in operation S83, in a case the third manipulation signal (OS3) was not inputted before a previous time by a preset remaining water removal time (ΔT) from the heating end time (T1) has arrived, the control unit 60 controls to end the operation of the water supply pump 33 when a previous time by a preset remaining water removal time (ΔT) from the heating end time (T1) arrives (S91) (S93).

In operation S89, if the operation of the steam heater 31 is ended, the operations S69 to S75 are performed. As described above, specific operations of the upper heater 11, the convection heater 15, the convection motor 17, the steam heater 31, the water supply pump 33, the lamp 21, and the fan motor 43 in operation S51, operation S53, operations S77 through S83, operations S77 through S89, operation S69 and operation S75 could be understood more definitely with reference to Fig. 6.

In the meantime, in operation S83, in a case the third manipulation signal (OS3) was not inputted before a previous time by a preset remaining water removal time (ΔT) from the heating end time (T1) has arrived, the control unit 60 controls to end the operation of the water supply pump 33 when a previous time by a preset remaining water removal time (ΔT) from the heating end time (T1) arrives (S91) (S93).

Next, the control part 60 determines if the heating end time (T1) has arrived (S95). Then, determined that the heating end time (T1) has arrived, the control part 60 controls to end the operation of the upper heater 11, the convection heater 15, the convection motor 17, the steam heater 31 and the lamp 21 (S97) . And, the control part 60 performs the operations S73 and S75. In the current embodiment, specific operations of the upper heater 11, the convection heater 15, the convection motor 17, the steam heater 31, the water supply pump 33, the lamp 21 and the fan motor 43 in operation S51, operation S53, operations S77 through S83, operations S91 through S97, operation S73 and operation S75 could be understood more definitely with reference to Fig. 7.

As described above, the cooker controlling method according to the embodiments expects itself to have the following effects.

First, in the embodiments, steam is furnished into a cooking chamber while food is cooked in the cooking chamber. Thus, a more effective cooking by steam furnished into a cooking chamber could be performed.

Also, in the embodiments, a phenomenon that steam furnished into a cooking chamber leaks through a porous part for transferring the energy of a heater installed outside the cooking chamber to the cooking chamber is reduced. Thus, operation reliability of a product may be more improved.

In addition, in the embodiments, when steam is furnished into a cooking chamber, a convection fan and a convection motor are operated. Thus, steam supplied into the cooking chamber will be more evenly circulated inside the cooking chamber.

While it has not been described in detail in the above-mentioned embodiments, in the course of cooking food in the cooking chamber, the operation of the upper heater, the halogen heater, the magnetron, the convection heater, the convection motor, the steam heater and the water supply pump would be ended when the cooking chamber is opened, that is, when a door entering into the cooking chamber is open. Considering it is the fact applying to a general cooker, for example an electronic range, the related detailed description will be omitted.

Although embodiments have been described with reference to a number of illustrative embodiments thereof, it should be understood that numerous other modifications and embodiments can be devised by those skilled in the art that will fall within the scope of the claims appended to this disclosure. More particularly, various variations and modifications are possible in the component parts and/or arrangements of the subject combination arrangement within the scope of the claims, in light of the disclosure and the drawings. In addition to variations and modifications in the component parts and/or arrangements, alternative uses will also be apparent to those skilled in the art.

## Claims

1. A method for controlling a cooker, comprising:
generating radiant heat and convection heat supplied into a cooking chamber by a heating source (10); and
operating a steam generator (30) to generate steam supplied into the cooking chamber,
**characterized in that**, when a signal for starting an operation of the steam generator (30) is input before an operation of the heating source (10) starts, the operation of the steam generator (30) starts at a preset time point regardless of a time point at which the operation of the heating source (10) starts, and
when a signal for starting an operation of the steam generator (30) is input after an operation of the heating source (10) starts, the operation of the steam generator (30) starts at a time point at which the signal is input.

2. The method according to claim 1, wherein the heating source (10) comprises a Sheath heater repeating an ON/OFF action at a preset time interval during a preset operation time to provide the radiant heat into the cooking chamber.

3. The method according to claim 2, wherein the Sheath heater is disposed on an upper portion of the cooking chamber.

4. The method according to claim 1, wherein the heating source (10) comprises:
a convection heater (15) repeating an ON/OFF action to maintain a cooking chamber temperature at a preset temperature during a preset operation time;
a convection fan (16) convecting heat of the convection heater into the cooking chamber; and
a convection motor (17) providing a driving force for an operation of the convection fan, the convection motor repeating an ON/OFF action at a preset time interval during the preset operation time.

5. The method according to claim 1, wherein the operation of the heating source (10) and the operation of the steam generator (30) are ended at the same time, or the operation of the heating source (10) is ended after the operation of the steam generator (30) is ended.

6. The method according to claim 1, wherein the operation of the steam generator (30) is ended when a signal for ending the operation of the steam generator (30) is input after a preset operation time elapses or the operation time elapses.

7. The method according to claim 1, wherein the steam generator (30) comprises:
a steam heater (31) heating steam water to generate steam supplied into the cooking chamber; and
a water supply pump (33) supplying the steam water heated by the steam heater.

8. The method according to claim 7, wherein an operation of the steam heater (31) is ended when a preset time elapses after an operation of the water supply pump (33) is ended.

9. The method according to claim 7, wherein the steam heater (31) continues an ON action during an operation time of the steam generator (30), and
the water supply pump (33) repeating a pumping action at a preset time interval during the operation time of the steam generator (30).

## Patentansprüche

1. Verfahren zum Steuern eines Herds, das aufweist:
Erzeugen von Strahlungswärme und Konvektionswärme, die durch eine Heizquelle (10) einem Garraum zugeführt werden; und
Betreiben eines Dampferzeugers (30), um Dampf zu erzeugen, der dem Garraum zugeführt wird,
**dadurch gekennzeichnet, dass** wenn ein Signal zum Starten eines Betriebs des Dampferzeugers (30) eingegeben wird, bevor ein Betrieb der Heizquelle (10) startet, der Betrieb des Dampferzeugers (30) zu einem voreingestellten Zeitpunkt startet, unabhängig von dem Zeitpunkt, zu dem der Betrieb der Heizquelle (10) startet, und
wenn ein Signal zum Starten eines Betriebs des Dampferzeugers (30) eingegeben wird, nachdem ein Betrieb der Heizquelle (10) startet, der Betrieb des Dampferzeugers (30) zu einem Zeitpunkt startet, an dem das Signal eingegeben wird.

2. Verfahren nach Anspruch 1, wobei die Heizquelle (10) einen Patronenheizkörper aufweist, der in einem voreingestellten Zeitintervall während einer voreingestellten Betriebszeit einen Ein-/Ausschaltvorgang wiederholt, um dem Garraum die Strahlungswärme zuzuführen.

3. Verfahren nach Anspruch 2, wobei der Patronenheizkörper an einem oberen Abschnitt des Garraums angeordnet ist.

4. Verfahren nach Anspruch 1, wobei die Heizquelle (10) aufweist:
einen Konvektionsheizer (15), der einen Ein-/Ausschaltvorgang wiederholt, um eine Garraumtemperatur während einer voreingestellten Betriebszeit auf einer voreingestellten Temperatur zu halten;
einen Konvektionsventilator (16), der die Wärme des Konvektionsheizers in den Garraum transferiert; und
einen Konvektionsmotor (17), der eine Antriebskraft für einen Betrieb des Konvektionsventilators bereitstellt, wobei der Konvektionsmotor in einem voreingestellten Zeitintervall während der voreingestellten Betriebszeit einen Ein-/Ausschaltvorgang wiederholt.

5. Verfahren nach Anspruch 1, wobei der Betrieb der Heizquelle (10) und der Betrieb des Dampferzeugers (30) gleichzeitig beendet werden, oder der Betrieb der Heizquelle (10) beendet wird, nachdem der Betrieb des Dampferzeugers (30) beendet worden ist.

6. Verfahren nach Anspruch 1, wobei der Betrieb des Dampferzeugers (30) beendet wird, wenn ein Signal zum Beenden des Betriebs des Dampferzeugers (30) eingegeben wird, nachdem eine voreingestellte Betriebszeit verstrichen ist oder die Betriebszeit verstrichen ist.

7. Verfahren nach Anspruch 1, wobei der Dampferzeuger (30) aufweist:
einen Dampferhitzer (31), der Dampfwasser erwärmt, um Dampf zu erzeugen, der dem Garraum zugeführt wird; und
eine Wasserzufuhrpumpe (33), die das Dampfwasser zuführt, das durch den Dampferhitzer erwärmt wird.

8. Verfahren nach Anspruch 7, wobei ein Betrieb des Dampferhitzers (31) beendet wird, wenn eine voreingestellte Zeit verstrichen ist, nachdem ein Betrieb der Wasserzufuhrpumpe (33) beendet worden ist.

9. Verfahren nach Anspruch 7, wobei der Dampferhitzer (31) einen Einschaltvorgang während einer Betriebszeit des Dampferzeugers (30) fortsetzt, und
die Wasserzufuhrpumpe (33) in einem voreingestellten Zeitintervall während der Betriebszeit des Dampferzeugers (30) einen Pumpvorgang wiederholt.

## Revendications

1. Procédé de commande d'un appareil de cuisson, comprenant :
la génération par une source de chaleur (10) de chaleur rayonnante et de chaleur de convection fournies dans une chambre de cuisson ; et
l'activation d'un générateur de vapeur (30) pour générer de la vapeur fournie dans la chambre de cuisson,
**caractérisé en ce que**, si un signal d'activation du générateur de vapeur (30) est entré avant l'activation de la source de chaleur (10), le générateur de vapeur (30) est activé à un moment défini, indépendamment du moment où la source de chaleur (10) est activée, et
en ce que, si un signal d'activation du générateur de vapeur (30) est entré après l'activation de la source de chaleur (10), le générateur de vapeur (30) est activé au moment où le signal est entré.

2. Procédé selon la revendication 1, où la source de chaleur (10) comprend une cartouche chauffante répétant une commutation ON/OFF à intervalle temporel défini pendant un temps de fonctionnement défini pour fournir la chaleur rayonnante dans la chambre de cuisson.

3. Procédé selon la revendication 2, où la cartouche chauffante est disposée sur une partie supérieure de la chambre de cuisson.

4. Procédé selon la revendication 1, où la source de chaleur (10) comprend :
un radiateur à convection (15) répétant une commutation ON/OFF pour maintenir la chambre de cuisson à une température définie pendant un temps de fonctionnement défini ;
un ventilateur de convection (16) pulsant la chaleur du radiateur à convection dans la chambre de cuisson ; et
un moteur de convection (17) générant une force d'entraînement pour le fonctionnement du ventilateur de convection, ledit moteur de convection répétant une commutation ON/OFF à intervalle temporel défini pendant le temps de fonctionnement défini.

5. Procédé selon la revendication 1, où la source de chaleur (10) et le générateur de vapeur (30) sont désactivés en même temps, ou bien la source de chaleur (10) est désactivée après la désactivation du générateur de vapeur (30).

6. Procédé selon la revendication 1, où le générateur de vapeur (30) est désactivé si un signal de désactivation du générateur de vapeur (30) est entré après l'écoulement d'un temps de fonctionnement défini ou l'écoulement du temps de fonctionnement.

7. Procédé selon la revendication 1, où le générateur de vapeur (30) comprend :
un chauffage à vapeur (31) chauffant de l'eau évaporable pour générer de la vapeur fournie dans la chambre de cuisson ; et
un pompe d'alimentation en eau (33) alimentant en eau évaporable chauffée par le chauffage à vapeur.

8. Procédé selon la revendication 7, où le chauffage à vapeur (31) est désactivé quand un temps défini s'est écoulé après désactivation de la pompe d'alimentation en eau (33).

9. Procédé selon la revendication 7, où le chauffage à vapeur (31) reste commuté sur ON pendant un temps de fonctionnement du générateur de vapeur (30), et où la pompe d'alimentation en eau (33) répète une opération de pompage à intervalle temporel défini pendant le temps de fonctionnement du générateur de vapeur (30).
